Europäisches Patentamt

(19) European Patent Office

Office européen des brevets

(11) Publication number: **0 096 451**
**B1**

(12) **EUROPEAN PATENT SPECIFICATION**

(45) Date of publication of patent specification: **13.04.88**

(21) Application number: **83300278.5**

(22) Date of filing: **20.01.83**

(51) Int. Cl.⁴: **B 01 D 47/16**

(54) **Gas scrubber.**

(30) Priority: **27.05.82 GB 8215564**

(43) Date of publication of application:
**21.12.83 Bulletin 83/51**

(45) Publication of the grant of the patent:
**13.04.88 Bulletin 88/15**

(84) Designated Contracting States:
**AT BE CH DE FR GB IT LI LU NL SE**

(56) References cited:
**GB-A-1 303 250**
**GB-A-2 050 863**
**US-A-2 374 699**

(73) Proprietor: **ACE (Air Contamination Extraction)
UK Ltd.
7 Upper High Street
Epsom, Surrey KT17 4QU (GB)**

(72) Inventor: **Gent, David Victor
30a Main Street
Lambley Nottingham (GB)**

(74) Representative: **Dealtry, Brian et al
Eric Potter & Clarkson 14, Oxford Street
Nottingham NG1 5BP (GB)**

Courier Press, Leamington Spa, England.

## Description

The present invention relates to a gas scrubber.

Published U.K. Patent Application 2050863A discloses a gas scrubber which includes a chamber housing one or more imperforate discs spaced from the internal walls of the chamber to define annular spaces. Cleansing liquid is fed to each disc and the disc(s) is rotated to create a curtain of liquid across the annular space. Gas to be cleaned is drawn through the chamber so that it has to pass through each curtain of liquid and in so doing a percentage of dirt is removed from the gas. A further disc is provided which is not supplied with cleansing liquid and which serves to remove liquid droplets in the gas flow so that the cleaned gas leaving the chamber is dry. A drawback with such a gas scrubber is that the discs become clogged with dirt so that the scrubber has to be periodically placed out of action for internal cleaning.

The present invention seeks to provide a similar type of gas scrubber as that disclosed in U.K. Patent Application 2050863A, the gas scrubber of the present invention having an improved scrubbing action and furthermore overcomes the above mentioned drawback.

According to the present invention there is provided a gas scrubber including a chamber having a gas inlet and a gas outlet, the chamber defining a gas flow path from the inlet to the outlet, characterised in that there is provided at least one rotatable perforate disc having perforate regions for creating a curtain of cleansing fluid across the gas flow path and for creating an associated zone of spray of cleansing fluid on the downstream side of said curtain.

Reference is now made to the accompanying drawing, in which:—

Figure 1 is a schematic sectional side view, of an embodiment according to the present invention;

Figure 2 is a schematic view taken along line II—II in Figure 1; and

Figure 3 is a schematic sectional side view of another embodiment according to the present invention.

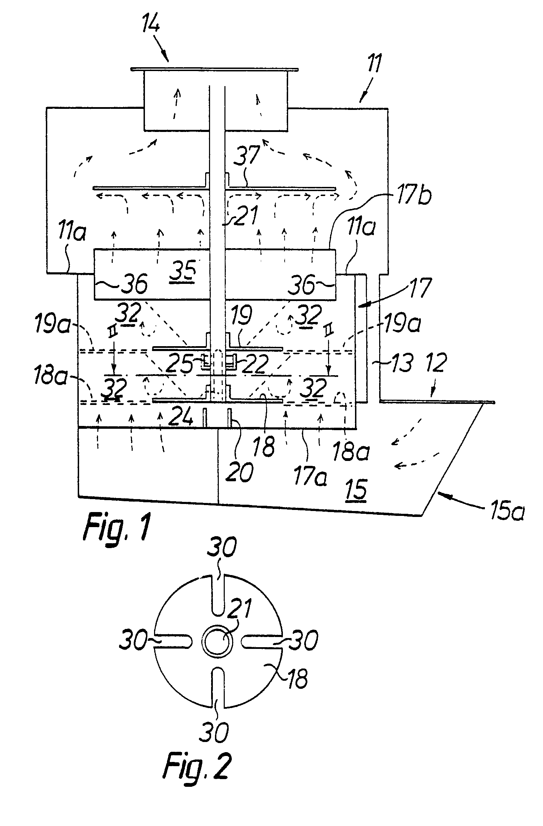

Referring initially to Figure 1 there is shown a gas scrubber 10 having a gas inlet 12 and gas outlet 14. Suction means (not shown), for instance a fan is connected to the outlet 14 to draw gas to be cleaned through the gas scrubber as indicated schematically by the broken arrows.

Initially gas to be cleaned is drawn via duct 15 from the inlet and into a cylindrical chamber 17 in which two rotatable discs 18, 19 are housed. The chamber 17 has a gas inlet 17a and a gas outlet 17b. Both discs 18, 19 are mounted on a common shaft 21 which is rotatably driven by drive means (not shown). A jet nozzle 20 is located below disc 18 for directing a flow of cleansing fluid onto the disc 18, the amount of cleansing fluid being delivered and the speed of rotation of the disc 18 being such as to create a solid curtain 18a of cleansing fluid of a desired thickness between the periphery of the disc 18 and the internal wall of chamber 17.

Disc 19 is similarly fed with cleansing fluid from a nozzle 22 so as to create a curtain 19a of cleansing fluid. To supply cleansing fluid to nozzle 22 shaft 21 is provided with an axially extending bore 24 and ports 25 via which cleansing fluid from nozzle 20 flows into nozzle 22. Cleansing fluid on hitting the internal wall of chamber 17 flows down the wall and into duct 15 to exit at port 15a. The cleansing fluid flowing from port 15a may be fed to a filtration or separating apparatus (not shown) such as a cyclonic separator for cleaning the cleansing fluid which may then be recycled.

The discs 18, 19 are provided with perforate regions (see Figure 2) which are provided to permit a desired quantity of cleansing fluid to pass through each disc to create a zone of spray, schematically illustrated at 32, on the downstream side of each curtain of cleansing fluid. Due to the passage of fluid and gas through the perforate regions turbulence is created in each zone 32. The size and shape of the perforate regions is chosen so as to permit sufficient cleansing fluid to pass through the disc and at the same time permits the disc to create the desired curtain of cleansing fluid. Additionally, the provision of the perforate regions discourage creation of eddy currents around each disc as are present when using an imperforate disc so that such eddy currents are eliminated or substantially reduced, thereby discouraging deposit of dirt on the downstream face of each disc 18, 19.

It is presently preferred for the perforate regions to be in the shape of radial slots 30 as shown in Figure 2 and for the area of the slots 30 to be about 25% of the total area of the disc. The perforate regions preferably open out onto the periphery of the disc so as not to provide a ridge which could interfere with the creation of the curtain.

The creation of the spray zone 32 is an important aspect of the present invention in that it provides a source of gas borne droplets of cleansing fluid (the importance of which will be referred to later) and also provides a further zone where the dirt particles can be wetted by the cleansing fluid. In creating zone 32 a certain proportion of dirt particles will be entrained in fluid droplets which are too heavy to be carried by the gas flow and these will fall and thereby remove the dirt particles from the gas. Other dirt particles will be wetted but remain gas borne.

The outlet 17b of chamber 17 is defined by a cylindrical tubular member 35 which is tubular in form and which provides a lip 36 which is of a depth to prevent cleansing fluid rising up the internal wall of chamber 17 and exiting out of outlet 17b.

The tubular member 35 is of sufficient axial extent to provide a laminar flow of the gas leaving chamber 17 and this laminar flow is directed onto the underside of rotatable disc 37 which is also mounted on shaft 21 housed in a chamber 11. The diameter of disc 37 is chosen to be at least the diameter of tubular member 35 so that all the laminar flow impinges onto the disc.

The gas emerging from chamber 17 includes gas borne dirt particles which have been wetted and also gas borne droplets of cleansing fluid. When the wetted gas borne dirt particles and gas borne droplets impinge on the disc 37 they tend to adhere thereto with the result that the droplets coalesce and the cleansing fluid is thrown off the disc thereby washing the dirt particles off the disc. The dirt containing cleansing fluid which is thrown off disc 37 hits the internal wall of chamber 11 and drains through pipes 13 (only one of which is shown) into duct 15.

As seen in Figure 1 the tubular member 35 projects upwardly from the floor of chamber 11a to define a lip which serves as a barrier to prevent cleansing fluid which has flowed down the internal walls of chamber 11 entering into the laminar gas flow exiting from chamber 11.

The gas flow is deflected around the disc 37 and enters the outlet 14 in a substantially dry condition.

The size of disc 37 or rate of rotation of shaft 21 is chosen so that the peripheral speed of the disc is sufficient to throw the coalesced droplets of cleansing liquid onto the internal wall of chamber 11 without causing atomisation of the droplets. In a system where water is the cleansing fluid the peripheral speed should not exceed 1000 ft/min (508 cm/sec) and is preferably about 800 ft/min (406.4 cm/sec).

In order to provide the desired amount of lift for carrying a maximum size of fluid droplet the restricted passages within the chamber through which the gas is drawn are chosen to be the same in cross-sectional area and of a predetermined size. In this respect the area between the periphery of discs 18 and 19 and the internal wall of chamber 17, the cross-sectional area of tubular member 35 and the area between the periphery of disc 37 and the internal wall of chamber 11 are preferably equal to one another. In a system where the cleansing fluid is water these areas are chosen so that a flow rate of gas through these areas does not exceed 1000 ft/min (508 cm/sec) and are preferably chosen to provide a flow rate of 800 ft/min (406.4 cm/sec).

It is to be appreciated that the number of discs within chamber 17 for forming curtains and associated spray zones can be varied depending upon the type and/or quantity of impurity to be removed. The gas scrubber can be used for removing particles from the gas, such as ash, or for removing a gaseous impurity. The cleansing fluid is chosen bearing in mind the impurity to be removed and in many instances will probably be water or an organic solvent.

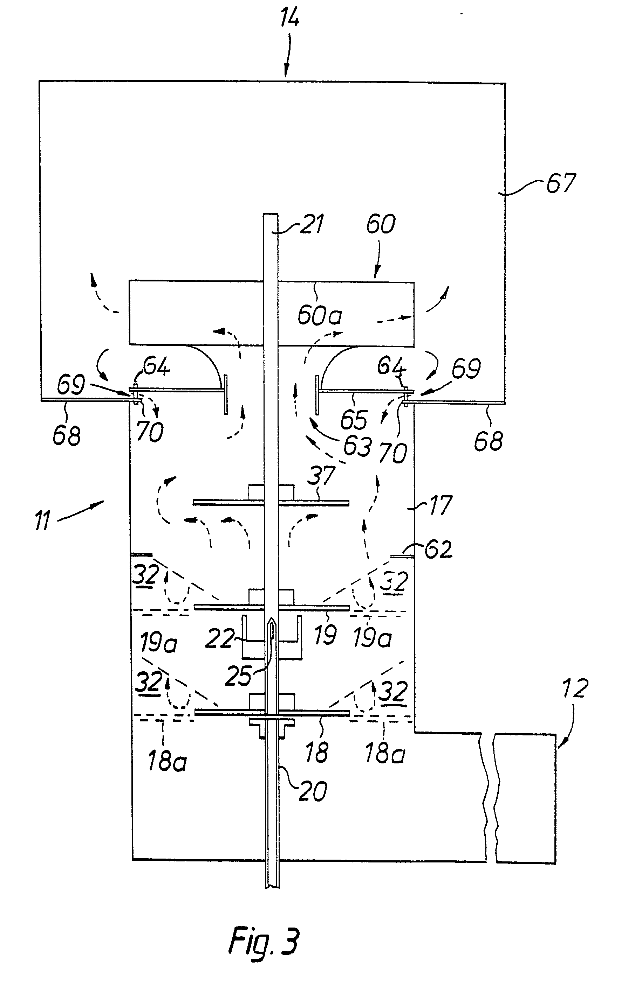

An alternative embodiment is illustrated in Figure 3 wherein parts similar to those in Figure 1 have been given the same reference numeral designation.

The Figure 3 embodiment differs from that in Figures 1 and 2 in that the discs 18, 19, and 37 are of a smaller diameter. Accordingly in order to obtain the same peripheral speeds, the shaft 21 is rotated faster thereby enabling a fan rotor 60 to be directly mounted on shaft 21. In the Figure 3 embodiment the fan rotor 60 serves to act as a further separator in addition to disc 37.

Air after passing by discs 18, 19 and their associated curtains and spray zones is deflected by a baffle plate 62 in the general direction of disc 37.

Air is then drawn into the intake port 63 of the fan rotor 60 and any airborne droplets coalesce either on the rotor blades or the flat top 60a of the rotor to be thrown onto the side wall of chamber 67 which houses the fan rotor 60.

A wall 65 separates the chamber housing disc 37 from the chamber 67 but is spaced at its periphery from the bottom wall 68 of chamber 67 by support posts 64 to define an annular gap 69. The fan rotor 60 creates a relatively high pressure in chamber 67 and relatively low pressure in chamber 17 so that there is an air flow from chamber 67 to chamber 17 through the annular gap 68. This air flow is advantageous in that it assists removal of liquid from chamber 67 into chamber 17 and also discourages any upward creep of liquid into chamber 67 past the protruding annular tip 70.

## Claims

1. A gas scrubber including a chamber having a gas inlet and a gas outlet, the chamber defining a gas flow path from the inlet to the outlet, characterised in that there is provided at least one rotatable perforate disc (18, 19) having perforate regions (30) for creating a curtain (18a, 19a) of cleansing fluid across the gas flow path and for creating an associated zone (32) of spray of cleansing fluid on the downstream side of said curtain.

2. A gas scrubber according to Claim 1 wherein a rotatable imperforate disc (37) is housed on the downstream side of said perforate disc(s) for removing gas borne droplets of liquid.

3. A gas scrubber according to Claim 2 including a baffle (35) for creating a laminar flow of gas for impinging on said rotatable imperforate disc.

4. A gas scrubber according to any preceding claim wherein the perforate regions extend generally radially of each disc.

5. A gas scrubber according to Claim 4 wherein the perforate regions extend to the periphery of each disc.

6. A gas scrubber according to Claim 4 or 5 wherein the perforate regions for each disc form about 25% of the surface area of the disc.

7. A gas scrubber according to Claim 2 or any of Claims 3 to 6 when dependent on Claim 2 wherein all discs are mounted on a common shaft (21).

8. A gas scrubber according to Claim 7 wherein a fan rotor (60) is mounted on said shaft for creating a flow of gas through the scrubber.

## Patentansprüche

1. Gaswäscher mit einer Kammer, die eine Zu- und Ablußleitung für Gas aufweist, wobei die Kammer eine Strömungsbahn des Gases von der Zuflußleitung zu der Abflußleitung bestimmt, dadurch gekennzeichnet, daß wenigstens eine drehbare perforierte Scheibe (18, 19) vorgesehen ist, die perforierte Regionen (30) aufweist, welche eine Abtrennung mittels Reinigungsflüssigkeit quer durch die Strömungsbahn des Gases erzeugt und welche eine daran angeschlossene Zone (32) mit Sprühnebel der Reinigungsflüssigkeit auf der Seite stromab der Abrennung erzeugt.

2. Gaswäscher nach Anspruch 1, dadurch gekennzeichnet, daß eine drehbare unperforierte Scheibe (37) auf der stromabwärtigen Seite der perforierten Scheibe (n) zum Beseitigen der entstehenden flüssigen Gas-Tropfen angeordnet ist.

3. Gaswäscher nach Anspruch 2, dadurch gekennzeichnet, daß eine Leitfläche (35) zur Erzeugung einer laminaren Gas-Strömung für die Beaufschlagung auf die rotierbare und perforierte Scheibe vorgesehen ist.

4. Gaswäscher nach einem der obigen Ansprüche, dadurch gekennzeichnet, daß sich die perforierten Regionen vorzugsweise radial auf jeder Scheibe erstrecken.

5. Gaswäscher nach Anspruch 4, dadurch gekennzeichnet, daß sich die perforierten Regionen bis zum Rand von jeder Scheibe erstrekken.

6. Gaswäscher nach Anspruch 4 oder 5, dadurch gekennzeichnet, daß bei jeder Scheibe etwa 25% der Oberfläche der Scheibe von den perforierten Regionen gebildet wird.

7. Gaswäscher nach Anspruch 2 oder einem der Ansprüche 3—6, soweit sie auf den Anspruch 2 aufbauen, dadurch gekennzeichnet, daß alle Scheiben an einer gemeinsamen Welle (21) befestigt sind.

8. Gaswäscher nach Anspruch 7, dadurch gekennzeichnet, daß ein Gebläse- Rotor (60) an der Welle befestigt ist, der einen Gasstrom durch den Gaswäscher erzeugt.

## Revendications

1. Laveur de gaz comprenant une chambre ayant une entrée de gaz et une sortie de gaz, la chambre délimitant un trajet de circulation de gaz de l'entrée jusqu'à la sortie, caractérisé en ce qu'il est prévu au moins un disque perforé rotatif (18, 19) ayant des régions perforées (30) pour créer un rideau (18a, 19a) de fluide de lavage transversalement au trajet de circulation du gaz et pour créer une zone associée d'embruns (32) du liquide de lavage sur le côté aval dudit rideau.

2. Laveur de gaz selon la revendication 1, dans lequel un disque rotatif non-perforé (37) est logé sur le côté aval du (des) dit(s) disques perforés pour éliminer les gouttelettes de liquide en suspension dans le gaz.

3. Laveur de gaz selon la revendication 2, comprenant un déflecteur (35) pour créer un écoulement laminaire de gaz destiné à faire impact sur ledit disque rotatif non-perforé.

4. Laveur de gaz selon l'une quelconque des revendications précédentes, dans lequel les régions perforées s'étendent généralement radialement à chaque disque.

5. Laveur de gaz selon la revendication 4, dans lequel les régions perforées s'étendent jusqu'à la périphérie de chaque disque.

6. Laveur de gaz selon la revendication 4 ou 5, dans lequel les régions perforées de chaque disque forment environ 25 % de la superficie du disque.

7. Laveur de gaz selon la revendication 2 ou selon n'importe laquelle des revendications 3 à 6 quand elles dépendent de la revendication 2, dans lequel tous les disques sont montés sur un arbre commun (21).

8. Laveur de gas selon la revendication 7, dans lequel un rotor de ventilateur (60) est monté sur ledit arbre pour créer un courant de gaz traversant le laveur.

0 096 451

Fig. 1

Fig. 2

1

Fig. 3